# EUROPEAN PATENT SPECIFICATION

(11) **EP 4 038 869 B1**
(45) Date of publication and mention of the grant of the patent: **21.08.2024**
(21) Application number: 21884130.2
(22) Date of filing: 18.11.2021
(51) Int. Cl.: H04M 3/42, H04L 67/306, H04M 1/57, H04M 3/436, H04M 1/253, H04M 3/493

(54) **A DIGITAL TELEPHONY SESSION INSTANTIATION AND CONTROL SYSTEM**
SYSTEM ZUR DIGITALEN TELEFONSITZUNGSINSTANZIIERUNG UND -STEUERUNG
SYSTÈME D'INSTANCIATION ET DE COMMANDE DE SESSION DE TÉLÉPHONIE NUMÉRIQUE

(30) Priority: 19.11.2020 AU 2020904273
(43) Date of publication of application: 10.08.2022
(73) Proprietor: Dutton, Christopher, Sydney, New South Wales 2000 (AU)
(72) Inventor: Dutton, Christopher, Sydney, New South Wales 2000 (AU)
(74) Representative: Vesterinen, Jussi Tapio
(86) International application number: PCT/AU2021/051372
(87) International publication number: WO 2022/104422

(56) References cited:
- EP-A1- 1 566 953
- WO-A1-00/79775
- US-A1- 2003 191 673
- US-A1- 2009 307 610
- US-A1- 2010 325 290
- US-A1- 2019 273 726
- US-B2- 8 600 361

## Description

### Field of the Invention

This invention relates generally to a digital telephony session instantiation and control system.

### Background

US 20190273726 A1 (Shumsker et al.) 05 September 2019 discloses a telecommunications management system (TMS) that receives an indication from a first user to participate in a telecommunication, identifies a characteristic of the first user and compare the characteristic with one or more characteristics of each user of a pool of users, selects, based on the comparison, a second user of the pool of users that matches the first user and initiates, responsive to selecting the matching second user, an anonymous telecommunications channel between the first user and the second user.

EP 1566953 A1 (Hägebarth) 24 August 2005 discloses a method whereby a mobile terminal logs on to a contact server that manages a personal profile of a first subscriber and a first communication connection is established between the mobile terminal of the first subscriber and a second subscriber whose personal profile matches with the personal profile of the first subscriber according to a search profile associated with the first subscriber. In response to a switch command, the first communication connection is interrupted and a second communication connection is established between the mobile terminal of the first subscriber and a third subscriber whose personal profile as well matches with the personal profile of the first subscriber according to the search profile.

US 20100325290 A1 (Rooks et al.) 23 December 2010 discloses a method for coordinating human interaction between users within a social network system. The method may include matching users together based on identified compatibility trends. The compatibility trends may be identified based on compatibility research and analysis and/or analysis of previous successful matches. Additionally, the method may include matching users together based on identified personal preferences. The personal preferences may be identified through monitoring the users' interactions with the Internet and determining personal preferences based on the interactions. In a particular embodiment, the social networking system may be a voice-based speed dating network which occurs via voice communications over the Internet.

The present invention seeks to provide a digital telephony session instantiation and control system, which will overcome or substantially ameliorate at least some of the deficiencies of the prior art, or to at least provide an alternative.

It is to be understood that, if any prior art information is referred to herein, such reference does not constitute an admission that the information forms part of the common general knowledge in the art, in Australia or any other country.

### Summary of the Disclosure

There is provided herein a digital telephony session instantiation control system as recited in claim 1.

Each mobile terminal is associated with a profile and the session controller is configured for matching first and second user profiles and signalling to instantiate a digital telephony session between first and second mobile terminals associated therewith.

Each mobile terminal may comprise a call controller having audio and video codecs for full duplex audio and video communication.

The session controller is configured to terminate the session upon expiry of a timer unless receiving first in-call input signals from both the first and second mobile terminals whereafter the timer is reset, or the session continues indefinitely until terminated by a user.

The session controller automatically terminating the session unless receiving the first in-call input signals from both the first and second mobile terminals reduces resource consumption, such as network bandwidth, processor utilisation and mobile terminal mobile device battery usage.

Alternatively, the session controller terminates the session responsive to a second in-call input signal received from either of the first and second mobile terminals whereafter the session controller may match the first profile with a third profile and instantiate a further digital telephony session between the first mobile terminal and a mobile terminal associated with the third profile.

The session controller is further configured to terminate the session responsive to a third in-call input signal received from one of the first and second mobile terminals and additionally disassociating the first and second profiles.

The session controller is configured for only matching non-disassociated user profiles. By not matching disassociated user profiles the session controller reduces telephony session instantiation resource consumption including processor utilisation and network bandwidth.

Other aspects of the invention are also disclosed.

### Brief Description of the Drawings

Notwithstanding any other forms which may fall within the scope of the present invention, preferred embodiments of the disclosure will now be described, by way of example only, with reference to the accompanying drawings in which:
Fig. 1 shows a digital telephony session instantiation and control system in accordance with a preferred embodiment of the present invention;
Fig. 2 shows an exemplary mobile terminal of the system of Fig. 1 in accordance with an embodiment;
Fig. 3 shows exemplary processing by the system of Fig. 1 in accordance with an embodiment; and
Fig. 4 shows an exemplary mobile terminal profile graph in accordance with an embodiment.

### Description of Embodiments

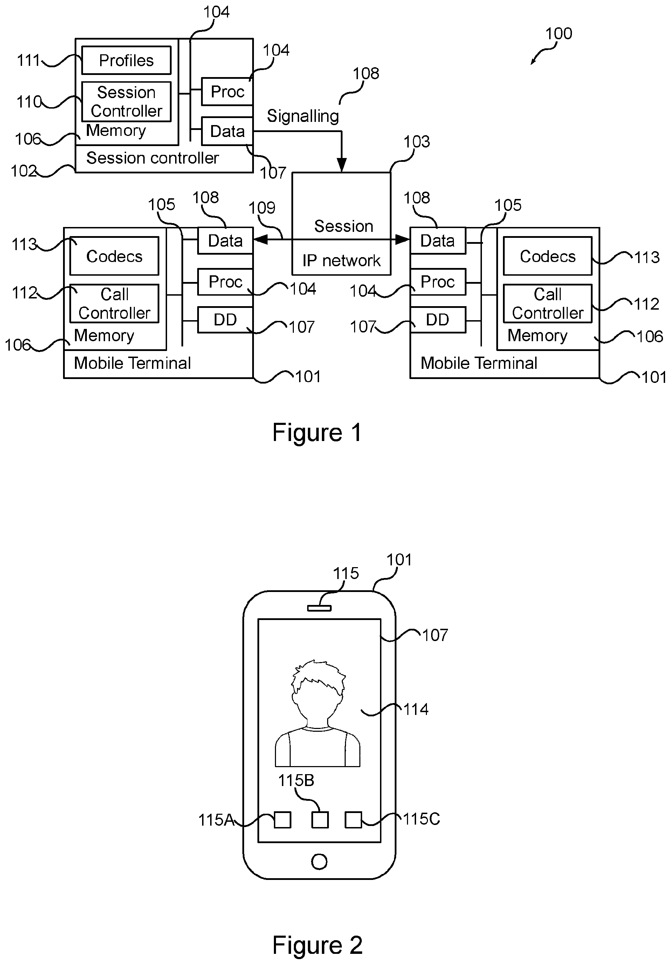

Figure 1 shows a digital telephony session instantiation and control system 100 comprising a plurality of mobile terminals 101 in operable communication with a session controller server 102 across an IP network 103.

Each mobile terminal 101 comprises a processor 104 for processing digital data. A memory device 106 is in operable communication with the processor 104 via a system bus 105.

The memory device 106 is configured for storing digital data including computer program code instructions. These computer program code instructions may be logically divided into a plurality of computer program code instruction controllers.

In use, the processor 104 fetches these computer program code instructions and associated data from the memory device 106 for interpretation and execution of the functionality described herein. The controllers and associated data may be installed in the memory device 106 by way of a software application downloaded via the IP network 103.

Each mobile terminal 101 further comprises a digital display device 107 for displaying digital data. A haptic overlay may overlay the digital display 107 to receive user gestures in relation to digital information displayed thereon.

Each mobile terminal 101 may further comprise a data interface 108 for sending and receiving data across the IP network 103.

The session controller 110 similarly comprises a processor 104 memory device 106 and a data interface 107.

As will be described in further detail below, the session controller 110 is configured for signalling 108 via the IP network 103 to instantiate digital telephony sessions 109 between mobile terminals 101.

In this regard, the server may execute a session controller 110 which signals 108 the IP network 109 to instantiate the digital telephony sessions 109. The session controller 110 may instantiate sessions 109 between mobile terminals 101 associated with user profiles 111.

Each mobile terminal 101 may comprise a call controller 112 for handling a digital telephony call. The call controller 112 may comprise a plurality of audio and video codecs for voice and telephony call sessions 109 across the IP network 103.

Figure 2 shows a mobile terminal 101 comprising the digital display 107 displaying a video representation 114 during a session 109 and playing out audio via an audio output device 115 thereof.

During a call, the call controller 112 may display a plurality of in-call inputs 115 for session control in the manner described below.

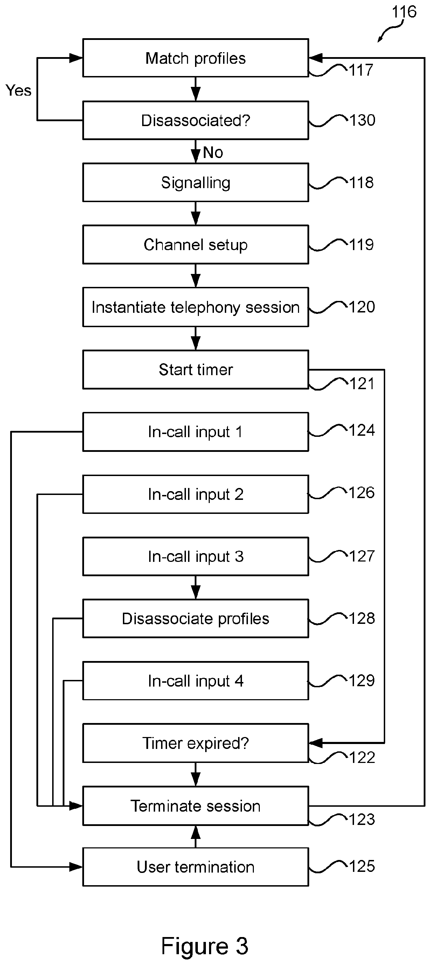

Figure 3 shows exemplary processing 116 by the system 100 in accordance with an exemplary embodiment.

The processing 116 comprises the session controller 110 matching first and second profiles from the profiles 111 at step 117. Each profile 111 may be associated with various meta data, including demographic, preferential, historical meta data and the like. The session controller 110 may use a matching algorithm to match two profiles according to the associated meta data.

At step 118, the session controller 110 signals 108 across the IP network 109 to instantiate a digital telephony session 109 between first and second mobile terminals 101 associated with the first and second profiles. Each mobile terminal 101 may receive an incoming call signal allowing the user thereof to accept or reject the call. Incoming call signal may display a subset of the meta data of the profile associated with the incoming call. In embodiments, users of each mobile terminal may schedule times for receiving calls.

In embodiments, each mobile terminal 101 may enter a virtual "waiting room" wherein the mobile terminal 101 signals the session controller 110 with incoming call available availability signals indicating that the mobile terminal 101 may currently accept incoming calls. As such, the session controller 110 may match profiles 111 only associated with mobile terminals 101 from which incoming call current availability signals have been received.

At step 119, the session controller 110 and mobile terminals 101 cooperate to set up an IP channel between the mobile terminals 101 for the digital telephony session 109 and at step 120 the telephony session 109 is instantiated.

As such, the mobile terminals 101 exchange audio and video data in duplex.

At step 121, the session controller 110 instantiate a timer. The timer may be about 60 seconds, for example.

At step 122, upon expiry of the timer, the session controller 110 terminates the session 109 at step 123. Alternatively, upon expiry of the timer, the session controller 110 may inhibit functionality of the session 109, such as by blurring the screen, interrupting or muting the audio or the like.

Thereafter, the session controller 110 may further match further profiles at step 117 to repeat the process. For example, the session control server 102 may match the first user profile with a third user profile and signal to instantiate a further session 109 between a first mobile terminal and a mobile terminal associated therewith.

Alternatively, should the session controller 110 receive first in-call input 115A signals from both of the mobile terminals 101 at step 124, the session controller 110 may cancel the timer such that the session 109 may continue indefinitely until user-initiated termination at step 125. Alternatively, where the session controller 110 inhibits functionality of the session 109, such inhibition may be removed.

In alternative embodiments, the session controller 110 may reset the timer so as to essentially extend the duration of the call for a predetermined time period. For example, the in-call controls may comprise an in-call input allowing for the indefinite extension of the session 109 (i.e., until such time that the session 109 is terminated by either mobile terminal 101) and/or a further in-call input allowing for the extension of the session 109 for a predetermined time period.

With reference to Figure 2, the first in-call input 115A is shown on-screen which, when selected by both of the users, causes the session 109 to continue indefinitely until the session 109 is terminated by one of the users. In this regard, once the first in-call input 115A is selected, a further call termination input (not shown) may be displayed for use by either user for terminating the session 109 at any time. Whereas the session controller 110 is responsive to the first in-call input 115A signals being received from both mobile terminals 101 in accordance with a preferred embodiment, in alternative embodiments, the session controller 110 may be responsive to the first in-call input 115A signal being received from only one of the mobile terminals 101 to extend the session 109.

Alternatively, responsive to a second in-call input 115B signal at step 126, the session controller 110 may terminate the session at step 123 and thereafter return to step 117.

Yet further alternatively, responsive to a third in-call input 115C signal at step 127, the session controller 110 may disassociates the profiles at step 128 and then terminate the session 109 at step 123.

By disassociating the profiles, the session controller 110 will thereafter not match the disassociated profiles at step 117.

Figure 3 shows an exemplary user profile 111 graph 133 of three user profiles 111A-C with associated mobile terminals 101A-C.

As is illustrated, when matching profiles 111, the session controller 110 may match profiles 111 using meta data relationships 132 as described above. However, in the embodiment shown, a first profile 111A has been recorded as being disassociated with a second profile 111B by a disassociation key 113, responsive to the third in-call input 115C signal. The disassociation key 131 may take the form of a foreign key relationship in a relational database and may be indexed for fast searching to reduce resource consumption and time when matching profiles 111.

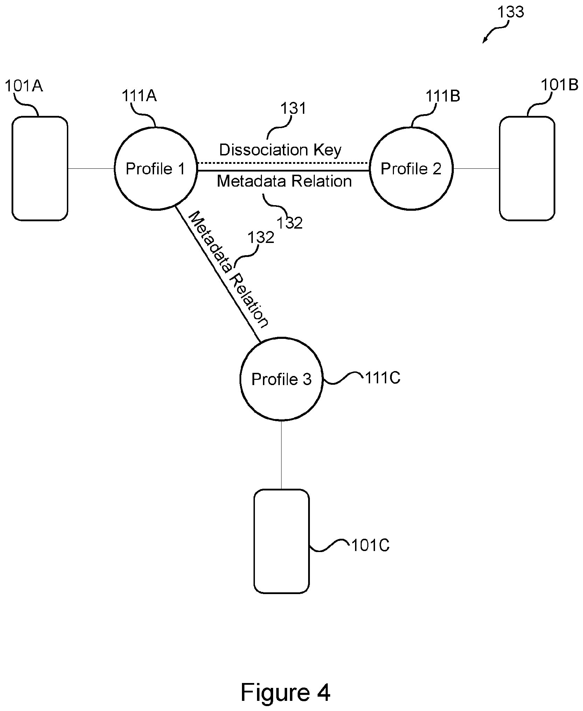

As such, as is further illustrated in Figure 3, at step 130, when matching profiles using the graph 133, the session controller 110 would check for the disassociation key 131 wherein, if the disassociation key 131 were found, such as between the first profile 111A and the second profile 111B as shown in Figure 4, the session controller 110 would not match the profiles 111A and 111B. However, the session controller 111 could match the first profile 111A with the third user profile 111C by the meta data relation 132 and therefore spend the resources to signal to set up a channel for instantiating a telephony session according to steps 118 - 120.

The session controller 110 may further inhibit communication functionality between mobile terminals 101 associated with respective disassociated profiles 111, such as by inhibiting text communication functionality between mobile terminals 101. Alternatively, the session controller 110 may enable text communication functionality between terminals 101 responsive to the second in-call input 115B.

in embodiments, the session controller 110 may analyse the audio and/or video data exchanged between the mobile terminals 101 to automatically terminate the session 109.

For example, the session controller 110 may analyse the audio to determine spoken word frequency and automatically terminate the session 109 when spoken word frequency falls beneath a threshold, such as when both or one user stops speaking or has limited speech input.

Alternatively, the session controller 110 may use a speech-to-text module to convert spoken words to text and infer tone using word categorisations and continue or terminate the session 109 depending on the tone of conversation between users of the mobile terminals 101. For example, the server may communicate with the IBM Watson^{™} Tone Analyzer service which uses linguistic analysis to detect emotional and language tones in the text.

Yet further, the session controller 110 may utilise facial recognition techniques to analyse facial gestures, such as smiling, frowning and or the like and continue or terminate the session 109 depending on the facial gestures of one or both users of the mobile terminals.

The foregoing description, for purposes of explanation, used specific nomenclature to provide a thorough understanding of the invention. However, it will be apparent to one skilled in the art that specific details are not required in order to practise the invention. Thus, the foregoing descriptions of specific embodiments of the invention are presented for purposes of illustration and description. They are not intended to be exhaustive or to limit the invention to the precise forms disclosed as obviously many modifications and variations are possible in view of the above teachings. The embodiments were chosen and described in order to best explain the principles of the invention and its practical applications, thereby enabling others skilled in the art to best utilize the invention and various embodiments with various modifications as are suited to the particular use contemplated. It is intended that the following claims define the scope of the invention.

The term "approximately" or similar as used herein should be construed as being within 10% of the value stated unless otherwise indicated.

## Claims

1. A digital telephony session instantiation and control system (100) comprising a plurality of mobile terminals (101) in operable communication with a server (102) executing a session controller (110) across an IP network (103), each mobile terminal (101) associated with a profile wherein the session controller (110) is configured for matching non-disassociated user profiles (111) and signalling to instantiate a digital telephony session between mobile terminals (101) associated with the non-disassociated user profiles (111), wherein the session controller (110):
terminates the session upon expiry of a timer unless receiving first in-call input signals from both mobile terminals (101);
terminates the session responsive to a second in-call input signal received from either mobile terminal (101); and
terminates the session and disassociates the profiles (111) responsive to a third in-call input signal received from either mobile terminal (101),
**characterised in that** the session controller (110) analyses at least one of audio and/or video data exchanged between the mobile terminals (101) to automatically terminate the session.

2. The system (100) as claimed in claim 1, wherein the session controller (110) is configured for resetting the timer responsive to the first in-call input signals.

3. The system (100) as claimed in claim 1, wherein the session controller (110) is configured for continuing the session responsive to the first in-call input signal until receiving a further session termination input signal from either mobile terminal (101).

4. The system (100) as claimed in claim 3, wherein a session termination input is displayed on digital displays (107) of both terminals (101) responsive to the first in-call input signals.

5. The system (100) as claimed in claim 1, wherein termination of the session upon expiry of the timer comprises inhibition of the session.

6. The system (100) as claimed in claim 5, wherein inhibition of the session comprises at least one of screen blurring and interruption.

7. The system (100) as claimed in claim 1, wherein the session controller (110) is configured for recording a disassociation key between the profiles (111) when disassociating the profiles (111).

8. The system (100) as claimed in claim 7, wherein the disassociation key is search indexed.

9. The system (100) as claimed in claim 1, wherein the session controller (110) terminates the session responsive to a fourth in-call input received from one of the first and second mobile terminals (101) and does not disassociate the first and second profiles (111).

10. The system (100) as claimed in claim 2, wherein the session controller (110) enables text communication functionality between the mobile terminals (101) responsive to the first in-call input signals.

11. The system (100) as claimed in claim 2, wherein the session controller (110) inhibits text communication functionality between mobile terminals (101) associated with disassociated profiles (111).

12. The system (100) as claimed in claim 1, wherein the session controller (110) matches the profiles (111) in accordance with meta data associated with the user profiles (111).

13. The system (100) as claimed in claim 12, wherein the meta data comprises demographic meta data.

14. The system (100) as claimed in claim 12, wherein, when instantiating the session, each mobile terminal (101) receives an incoming call on-screen notification comprising a subset of the meta data.

15. The system (100) as claimed in claim 1, wherein after terminating the session, the session controller (110) matches a further non-disassociated user profile (111) and signals to instantiate a further digital telephony session between one of the mobile terminals (101) and a further mobile terminal (101) associated with the further non-disassociated user profile (111).

16. The system (100) as claimed in claim 1, wherein each mobile terminal (101) comprises a call controller (112) having audio and video codecs (113) for duplex audio and video communication.

17. The system (100) as claimed in claim 1, wherein the session controller (110) analyses the audio to determine spoken word frequency and automatically terminates the session when spoken word frequency falls beneath a threshold.

18. The system (100) as claimed in claim 1, wherein the session controller (110) converts spoken words to text, and terminates the session depending on the text.

19. The system (100) as claimed in claim 1, wherein the session controller (110) is responsive to incoming call current availability signals from mobile terminals (101) and wherein, when matching user profiles (111), the session controller (110) is configured for only matching user profiles (111) associated with mobile terminals (101) for which incoming call current availability signals have been received.

## Patentansprüche

1. System (100) zur digitalen Telefoniesitzungsinstanziierung und Steuerung, das eine Vielzahl von mobilen Endgeräten (101) in operativer Kommunikation mit einem Server (102) umfasst, der eine Sitzungssteuerung (110) über ein IP-Netzwerk (103) ausführt, wobei jedes mobile Endgerät (101) mit einem Profil assoziiert ist, wobei die Sitzungssteuerung (110) konfiguriert ist zum Zusammenpassen von nicht disjunkten Benutzerprofilen (111) und Signalisieren, eine digitale Telefoniesitzung zwischen mobilen Endgeräten (101) zu instanziieren, die mit nicht disjunkten Benutzerprofilen (111) assoziiert sind, wobei die Sitzungssteuerung (110):
die Sitzung nach Ablauf eines Zeitgebers beendet, es sei denn, es empfängt erste In-Anruf-Eingangssignale von beiden mobilen Endgeräten (101);
die Sitzung als Reaktion auf ein zweites In-Anruf-Eingangssignal beendet, das von einem der mobilen Endgeräte (101) empfangen wird; und
die Sitzung beendet und die Profile (111) als Reaktion auf ein drittes In-Anruf-Eingangssignal, das von einem der mobilen Endgeräte (101) empfangen wird, trennt,
**dadurch gekennzeichnet, dass** die Sitzungssteuerung (110) mindestens eines von Audio- und/oder Videodaten analysiert, die zwischen den mobilen Endgeräten (101) ausgetauscht werden, um die Sitzung automatisch zu beenden.

2. System (100) nach Anspruch 1, wobei die Sitzungssteuerung (110) konfiguriert ist, um den Zeitgeber als Reaktion auf die ersten In-Anruf-Eingangssignale zurückzusetzen.

3. Das System (100) nach Anspruch 1, wobei die Sitzungssteuerung (110) konfiguriert ist, um die Sitzung als Reaktion auf das erste In-Anruf-Eingangssignal fortzusetzen, bis ein weiteres Sitzungsbeendigungseingangssignal von einem der mobilen Endgeräte (101) empfangen wird.

4. System (100) nach Anspruch 3, wobei eine Sitzungsbeendigungseingabe auf digitalen Anzeigen (107) beider Endgeräte (101) als Reaktion auf die ersten In-Anruf-Eingangssignale angezeigt wird.

5. System (100) nach Anspruch 1, wobei das Beenden der Sitzung nach Ablauf des Zeitgebers die Hemmung der Sitzung umfasst.

6. System (100) nach Anspruch 5, wobei die Hemmung der Sitzung mindestens eines von einer Bildschirmunschärfe und einer Unterbrechung umfasst.

7. System (100) nach Anspruch 1, wobei die Sitzungssteuerung (110) konfiguriert ist, um einen Disassoziationsschlüssel zwischen den Profilen (111) aufzuzeichnen, wenn die Profile (111) getrennt werden.

8. System (100) nach Anspruch 7, wobei der Disassoziationsschlüssel für eine Suche indexiert wird.

9. System (100) nach Anspruch 1, wobei die Sitzungssteuerung (110) die Sitzung als Reaktion auf eine vierte In-Anruf-Eingabe beendet, die von einem des ersten und zweiten mobilen Endgeräts (101) empfangen wird, und das erste und zweite Profil (111) nicht trennt.

10. System (100) nach Anspruch 2, wobei die Sitzungssteuerung (110) eine Textkommunikationsfunktionalität zwischen den mobilen Endgeräten (101) als Reaktion auf die ersten In-Anruf-Eingangssignale ermöglicht.

11. System (100) nach Anspruch 2, wobei die Sitzungssteuerung (110) eine Textkommunikationsfunktionalität zwischen mobilen Endgeräten (101), die mit disjunkten Profilen (111) assoziiert sind, hemmt.

12. System (100) nach Anspruch 1, wobei die Sitzungssteuerung (110) die Profile (111) gemäß Metadaten zusammenpasst, die mit den Benutzerprofilen (111) assoziiert sind.

13. System (100) nach Anspruch 12, wobei die Metadaten demographische Metadaten umfassen.

14. System (100) nach Anspruch 12, wobei, wenn die Sitzung instanziiert wird, jedes mobile Endgerät (101) eine eingehende Anruf-On-Screen-Benachrichtigung empfängt, die eine Teilmenge der Metadaten umfasst.

15. System (100) nach Anspruch 1, wobei nach dem Beenden der Sitzung die Sitzungssteuerung (110) ein weiteres nicht disjunktes Benutzerprofil (111) zusammenpasst, und zum Instanziieren einer weiteren digitalen Telefoniesitzung zwischen einem der mobilen Endgeräte (101) und einem weiteren mobilen Endgerät (101), das mit dem weiteren nicht disjunkten Benutzerprofil (111) assoziiert ist, signalisiert.

16. System (100) nach Anspruch 1, wobei jedes mobile Endgerät (101) eine Anrufsteuerung (112) umfasst, die Audio-und Video-Codecs (113) für Duplex-Audio-und Videokommunikation aufweist.

17. System (100) nach Anspruch 1, wobei die Sitzungssteuerung (110) das Audio analysiert, um gesprochene Wortfrequenz zu bestimmen und automatisch die Sitzung zu beenden, wenn die gesprochene Wortfrequenz unter einen Schwellenwert fällt.

18. System (100) nach Anspruch 1, wobei die Sitzungssteuerung (110) gesprochene Wörter in Text umwandelt und die Sitzung in Abhängigkeit von dem Text beendet.

19. System (100) nach Anspruch 1, wobei die Sitzungssteuerung (110) auf eingehende Anrufstromverfügbarkeitssignale von mobilen Endgeräten (101) anspricht, und wobei, wenn Benutzerprofile (111) zusammengepasst werden, die Sitzungssteuerung (110) konfiguriert ist, um Benutzerprofile (111) nur dann zusammenpassen, wenn die mit mobilen Endgeräten (101) assoziiert sind, für die eingehende Anrufstromverfügbarkeitssignale empfangen wurden.

## Revendications

1. Système d'instanciation et de commande de session de téléphonie numérique (100) comprenant une pluralité de terminaux mobiles (101) en communication fonctionnelle avec un serveur (102) exécutant un contrôleur de session (110) à travers un réseau IP (103), chaque terminal mobile (101) étant associé à un profil dans lequel le contrôleur de session (110) est configuré pour mettre en correspondance des profils d'utilisateur non dissociés (111) et signaler pour instancier une session de téléphonie numérique entre des terminaux mobiles (101) associés aux profils d'utilisateur non dissociés (111), dans lequel le contrôleur de session (110) :
met fin à la session à l'expiration d'un temporisateur à moins de recevoir des premiers signaux d'entrée d'appel en provenance des deux terminaux mobiles (101) ;
met fin à la session en réponse à un second signal d'entrée d'appel reçu en provenance de l'un ou l'autre des terminaux mobiles (101) ; et
met fin à la session et désassocie les profils (111) en réponse à un troisième signal d'entrée d'appel reçu en provenance de l'un ou l'autre des terminaux mobiles (101),
**caractérisé en ce que** le contrôleur de session (110) analyse au moins des données audio et/ou vidéo échangées entre les terminaux mobiles (101) pour terminer automatiquement la session.

2. Système (100) selon la revendication 1, dans lequel le contrôleur de session (110) est configuré pour réinitialiser le temporisateur en réponse aux premiers signaux d'entrée d'appel.

3. Système (100) selon la revendication 1, dans lequel le contrôleur de session (110) est configuré pour poursuivre la session en réponse au premier signal d'entrée d'appel jusqu'à la réception d'un autre signal d'entrée de fin de session en provenance de l'un ou l'autre des terminaux mobiles (101).

4. Système (100) selon la revendication 3, dans lequel une entrée de fin de session est affichée sur des affichages numériques (107) des deux terminaux (101) en réponse aux premiers signaux d'entrée d'appel.

5. Système (100) selon la revendication 1, dans lequel la terminaison de la session à l'expiration du temporisateur comprend l'inhibition de la session.

6. Système (100) selon la revendication 5, dans lequel l'inhibition de la session comprend au moins l'un parmi un flou d'écran et une interruption.

7. Système (100) selon la revendication 1, dans lequel le contrôleur de session (110) est configuré pour enregistrer une clé de dissociation entre les profils (111) lors de la dissociation des profils (111).

8. Système (100) selon la revendication 7, dans lequel la clé de dissociation est indexée pour une recherche.

9. Système (100) selon la revendication 1, dans lequel le contrôleur de session (110) termine la session en réponse à une quatrième entrée d'appel reçue de l'un des premier et deuxième terminaux mobiles (101) et ne dissocie pas les premier et deuxième profils (111).

10. Système (100) selon la revendication 2, dans lequel le contrôleur de session (110) permet une fonctionnalité de communication de texte entre les terminaux mobiles (101) en réponse aux premiers signaux d'entrée d'appel.

11. Système (100) selon la revendication 2, dans lequel le contrôleur de session (110) inhibe une fonctionnalité de communication de texte entre des terminaux mobiles (101) associés à des profils dissociés (111).

12. Système (100) selon la revendication 1, dans lequel le contrôleur de session (110) met en correspondance les profils (111) conformément à des métadonnées associées aux profils d'utilisateur (111).

13. Système (100) selon la revendication 12, dans lequel les métadonnées comprennent des métadonnées démographiques.

14. Système (100) selon la revendication 12, dans lequel, lors de l'instanciation de la session, chaque terminal mobile (101) reçoit une notification sur écran d'appel entrant comprenant un sous-ensemble des métadonnées.

15. Système (100) selon la revendication 1, dans lequel, après la terminaison de la session, le contrôleur de session (110) met en correspondance un autre profil d'utilisateur non dissocié (111) et signalise pour instancier une autre session de téléphonie numérique entre l'un des terminaux mobiles (101) et un autre terminal mobile (101) associé à l'autre profil d'utilisateur non dissocié (111).

16. Système (100) selon la revendication 1, dans lequel chaque terminal mobile (101) comprend un contrôleur d'appel (112) ayant des codecs audio et vidéo (113) pour une communication audio et vidéo duplex.

17. Système (100) selon la revendication 1, dans lequel le contrôleur de session (110) analyse l'audio pour déterminer la fréquence de mot prononcé et met fin automatiquement à la session lorsque la fréquence de mot prononcé tombe en dessous d'un seuil.

18. Système (100) selon la revendication 1, dans lequel le contrôleur de session (110) convertit des mots prononcés en texte, et met fin à la session en fonction du texte.

19. Système (100) selon la revendication 1, dans lequel le contrôleur de session (110) réagit à des signaux de disponibilité de courant d'appel entrant provenant de terminaux mobiles (101) et dans lequel, lors de la mise en correspondance de profils d'utilisateur (111), le contrôleur de session (110) est configuré pour uniquement mettre en correspondance des profils d'utilisateur (111) associés à des terminaux mobiles (101) pour lesquels des signaux de disponibilité de courant d'appel entrant ont été reçus.
